# EUROPEAN PATENT APPLICATION

(11) **EP 2 887 625 A1**
(43) Date of publication of application: **24.06.2015**
(21) Application number: 13306783.5
(22) Date of filing: 19.12.2013
(51) Int. Cl.: H04M 3/22, H04M 3/436

(54) **Method for real-time reporting and prevention of call abuse**

(71) Applicant: ALCATEL LUCENT, 92100 Boulogne-Billancourt (FR)
(72) Inventor: Van Broeck, Sigurd, 2018 Antwerpen (BE); Verzijp, Nico, 2018 Antwerpen (BE); Vermoesen, Luc, 2018 Antwerpen (BE)
(74) Representative: ALU Antw Patent Attorneys

(57) **Abstract**

The present invention relates to a method, system and related devices for a first call party reporting abuse of a communication session by a second call party, where said first call party is involved in said communications session established between said first call party associated with a first communications device and at least said second call party associated with a second communications device. The first communications device and the second communications device are being coupled over a communications network. The method comprises the steps of collecting information on said second call party making abuse for inclusion in an abuse report at detecting an abuse attempt by said second call party, creating a report including said information collected and reporting abuse of said communication session to an authorized organization. Subsequently such authorized organization, based on said reporting of abuse may intercept said communication session and optionally the authorized organization, may take at least one further action.

## Description

### FIELD OF THE INVENTION

The present invention relates to the field of real-time reporting and prevention of abuse of a communication session, and in particular to a method, system and related devices involved in real-time reporting and prevention of abuse of a communication session.

### TECHNICAL BACKGROUND OF THE INVENTION

Criminals are calling people in their home to ask for control over their computer. Such callers try to convince the callee by identifying themselves as employees of e.g. Microsoft with the task of solving a security or software problem on the callee's computer. Once the criminal has control over the computer, they are able to retreive all kinds of information like paswords, account numbers, contacts, mails, and other sensitive information, to install malicious software that can lock down the computer until a payment is made, that monitors the user's interactions, that uses the computer as part of a large criminal network, that sends unauthorized mails, or that retrieves and optionally stores malicious or indecent content from Web sites while the unwary user may even be held responsible by law enforcement organizations for certain of these actions.

Callees that suspect the caller from malicious intent have no easy way to inform the incident to an authorized organization, e.g police computer crime unit or local police. The only way to initiate a malicious call trace is by dailing e.g. *57, a feature that is not easy to recall for the average user. A neglectable number of users own a phone with a special button or configure their phone for such feature. Currently, people wary of the criminal activity have almost no other means then to spread the word of such criminal activity to others. Occasionally, they report the incident to their IT department in case they are being called at the office. Only sporadically people will also inform an autorized organization that is equiped to deal with these kind of situations. In such case, the callee is often not able to provide the necessary information to the autorized instance that could enable them to track down and take appropriate actions against the criminal if they also didn't initiate a malicious call trace during the call.

Criminal behaviour as reported above is clearly not handled adequately. The procedures are far too cumbersome and error prone. The authorities will normally also not act on a malicious call trace only, unless the user also reports the incident via a formal channel to the authorities. Malicious callers can therefore continue their criminal behaviour for a substantial period of time in which many people may get victimized.

### SUMMARY OF THE INVENTION

An objective of the present invention is to provide with a method, a system and related devices for reporting abuse of a communication session wherein the aforementioned shortcoming or drawbacks of the known solutions are alleviated or overcome.

Accordingly, embodiments of the present invention relate to a method for a first call party reporting abuse of a communication session by a second call party, said first call party being involved in said communications session established between said first call party associated with a first communications device and at least said second call party associated with a second communications device, said first communications device and said second communications device being coupled over a communications network, said method comprising the steps of:
-. Collecting information on said second call party making abuse for inclusion in an abuse report at detecting an abuse attempt by said second call party; and
-. Creating a report including said information collected; and
-. Reporting abuse of said communication session to an authorized organization; and
-. Said authorized organization, based on said reporting of abuse, intercepting said communication session; and
-. Said authorized organization, taking at least one further action.

Correspondingly, embodiments of the invention relate to a system configured to report, initiated by a first call party, abuse of a communication session by a second call party, said first call party being involved in said communications session established between a first communications device associated with said first call party and a second communications device associated with said second call party, said first communications device and said second communications device being coupled over a communications network, said system comprising:
-. a collecting means, configured to collect information on said second call party making abuse for inclusion in an abuse report at detecting an abuse attempt by said second call party; and
-. a report creation means, configured to create a report including said information collected by said collecting means; and
-. a reporting means, configured to report abuse of said communication session to an authorized organization; and
-. A session intercepting means, configured to intercept said communication session (call) initiated by said authorized organization at reporting of said abuse of said communications session;
-. an action management means, configured to manage taking at least one further action based input of said authorized organization.

Correspondingly, embodiments of the invention relate to a First Communications device for use in a System configured to report, initiated by a first call party, abuse of a communication session by a second call party, said first call party being involved in said communications session established between said first communications device associated with said first call party and a second communications device associated with said second call party, said first communications device and said second communications device being coupled over a communications network, said first communications device comprising:
-. an abuse report activation means, configured to trigger reporting abuse of said communication session.

Correspondingly, embodiments of the invention relate to an Application platform device for use in a System configured to report, initiated by a first call party, abuse of a communication session by a second call party, said first call party being involved in said communications session established between said first communications device associated with said first call party and a second communications device associated with (at least) said second call party, said first communications device and said second communications device being coupled over a communications network, said Application platform device comprising:
-. a collecting means, configured to collect information on said second call party making abuse for inclusion in an abuse report at detecting an abuse attempt by said second call party; and
-. a report creation means, configured to create a report including said information collected by said collecting means; and
-. a reporting means, configured to report abuse of said communication session to an authorized organization; and
-. A session intercepting means, configured to intercept said communication session initiated by said authorized organization at reporting of said abuse of said communications session;
-. an action management means, configured to manage taking at least one further appropriate action based input of said authorized organization.

It is to be noted that the described functional means of the system may be distributed over the first communications device and/or one or more further network elements as described in the further appended claims.

In this way, by a first call party at a first communication device, initiating a call abuse reporting procedure or step, a subsequent step is, by means of a collecting means, collecting information on the second call party making abuse of the communications session, which information is intended for inclusion in an abuse report, subsequently a report creation means, creating a report including the information collected by the collecting means, which step is followed by reporting abuse of the communication session to an authorized organization, which authorized organization at reporting of said abuse of said communications session, initiates the intercepting of the communication session, and additionally manages the optional taking of further appropriate actions based on input of said authorized organization so that the abusing call party can be heard by an authorized party and subsequently proof against the abusing call party can be collected and information can be obtained for supporting the localizing and catching of such abusing call party in action.

Such communications session may be a voice call or alternatively a video call or chat session texting messages such as (SMS/MMS/.../SKYPE/...) or any combination thereof.

The information collected may include a well-defined set of information like the abusing call party's phone number, the date and time, the browser identification, the SIM used, caller's communication network entry/connection information, physical location information deduced via communication networks (e.g. mobile triangulation) and any other relevant information.

Such an authorization organization may alternatively be a community build organization maintained collaboratively by largely anonymous Internet volunteers who collaborate without pay. When a potential malicious call is detected, volunteers are selected on a first come first serve basis, will be able to listen in on the conversation, and optionally to intercept and/or reroute the call away from the malicious caller or callee to themselves, to law enforcement organizations, or any other authorized organization.

In another embodiment of the method, system and or related devices of the present invention, the information collected on the second call party abusing the communication session may be stored in a repository and additionally applied for call abuse prevention management.

Indeed, in case such abusing call party at a later instance again attempts to abuse a further call party, the Application platform device may apply the information on abusing call parties again for call abuse prevention management.

Call abuse prevention management here is meant to include the management of the communication session establishment in such manner that a communication session is not established at all in case the abusing, calling party is a call party identified by the information stored in the repository or in case a calling party attempts to establish a connection with a potentially abusive call party of which information is included in such repository.

Call abuse prevention management here is also meant to include the presentation of a warning to the further call party that such call may be initiated by a call party with malicious intent or alternatively in case a calling party attempts to establish a connection with a potentially abusive call party of which information is included in such repository.

Further alternatives of Call abuse prevention management may include immediate rerouting of the call to authorized organizations, listen in by authorized organizations with the authority to intervene, or giving the calling party a busy tone while authorized organizations connect to the callee to inform them of the adverted malicious call.

Still alternative preventive actions are (1) connect malicious caller to recorded announcement, (2) connect malicious caller to another malicious caller, (3) provide the IP address of the AOD where countermeasures are installed (e.g. AOD installs spyware on device of malicious caller).

Currently, it is possible to block a caller based on caller-id information and network uses only this information to do that. Moreover, this functionality is realized on the receiving client. Due to collecting network information about the caller, this information can be used as input/basis to determine the 'same caller' and block the call. This leverages in-network knowledge to protect abused called party without exposing specifics to end-users . This may be the same feature as 'block caller' based on caller telephone nr but use different metrics/means to determine actual physical caller.

In another embodiment of the method, system and or related devices of the present invention the at least one further possible action may include, analyze voice of said second call party, conversation pattern analysis of said second call party, origination tracking of said abusing call party in order to collect prove against the abusing call party, additionally determining location information (at geographical or networking level) of such abusing call party in order to catch and prosecute and/or to prevent such abusing call party from causing damage.

In another embodiment, the call abuse report can also be made by the caller that pushed a call button on a malicious Web-site. It should be noted that the upcoming WebRTC specification is able to provide all Web sites with an integrated call feature.

Alternative call setups are (1) a link in an email or chat session, (2) a link in a postal letter, (3) a QR code.

Further characterizing embodiments of the present method, system and related device for reporting call abuse are mentioned in the appended claims.

It is to be noticed that the term 'comprising', used in the claims, should not be interpreted as being restricted to the means listed thereafter. Thus, the scope of the expression 'a device comprising means A and B' should not be limited to devices consisting only of components A and B. It means that with respect to the present invention, the only relevant components of the device are A and B.

Similarly, it is to be noticed that the term 'coupled', also used in the claims, should not be interpreted as being restricted to direct connections only. Thus, the scope of the expression 'a device A coupled to a device B' should not be limited to devices or systems wherein an output of device A is directly connected to an input of device B. It means that there exists a path between an output of A and an input of B which may be a path including other devices or means.

Similarly, it is to be noticed that the term 'location', also used in the claims, should not be interpreted as being restricted to geographical location only. Thus, the scope of the expression 'determine the location of a caller' should not be limited to the geographical location of the device being used by the caller but indicates as well any network connection information (access point into communication networks) as well as any co-located connection information that can be deduced from geographical proximity about the caller's physical identity (e.g. if caller used fixed line communication technology to make abusive call, but also has a mobile phone (but not in use), then using techniques such as triangulation to determine position and using the information over time about the location information obtained can lead to actual identification of physical person behind the abusive act.

### BRIEF DESCRIPTION OF THE DRAWINGS

The above and other objects and features of the invention will become more apparent and the invention itself will be best understood by referring to the following description of an embodiment taken in conjunction with the accompanying drawings wherein:
Fig. 1 represents a functional representation of a system for real-time reporting and prevention of abuse of a communication session according to an embodiment of the present invention; and
Fig. 2 represents the functional structure of a communication device CD1 an Authorized Organization device AOD and an Application platform device MP according to an embodiment of the present invention.

The description and drawings merely illustrate the principles of the invention. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

### DESCRIPTION OF EMBODIMENTS

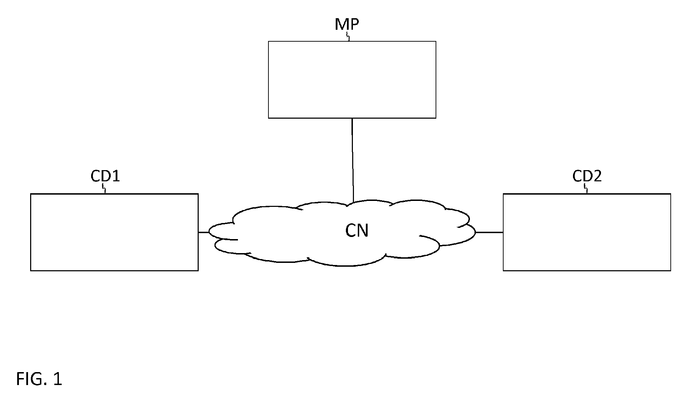

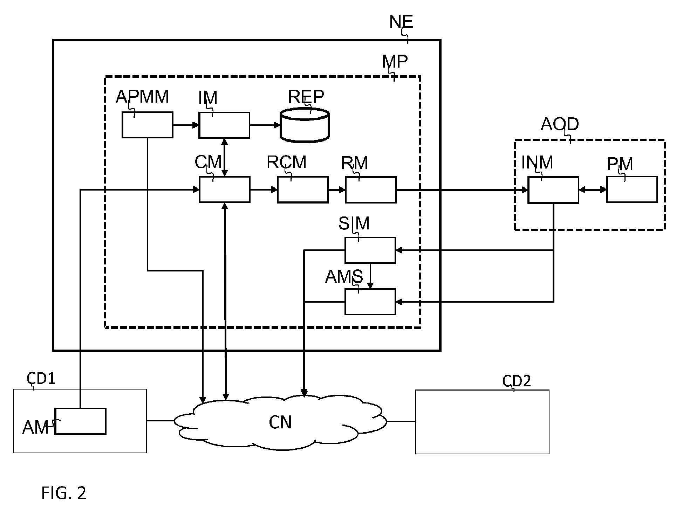

In the following paragraphs, referring to the drawing in FIG.1, an implementation of the system for reporting abuse of a communication session according to an embodiment of the present invention is described. In the second paragraph, all connections between mentioned elements are defined. Subsequently all relevant functional means of the mentioned system as presented in FIG.2 are described followed by a description of all interconnections.

In the succeeding paragraph the actual execution of the system is described.

First essential elements of the system are a first communication device CD1 and a second communication device CD2 being involved in a communication session that may be established over a communications network CN. The first communications device CD1 is associated with a first call party and the second communications device CD2 is associated with the second call party. Both such communications devices may be any fixed or mobile phone, a (mobile) computing device with at least supporting voice communications capabilities such a desktop or laptop PC, a tablet PC etc being connected to the fixed or mobile telephone network or internet connected over fixed or mobile connection like respectively XDSL, LAN or 3G, or 4G mobile connections.

The communications device is able to forward a call trace request of a malicious call attempt, initiated by the second call party, by a stored procedure or by artificial intelligence to the Application platform device MP.

Further, the Application platform device MP being a management platform that is able receive the call trace request, can perform or activate various tasks like recording the session, gathering additional call trace data, collecting malicious call information from a multitude of users, performing voice analysis, performing conversation pattern analysis, localizing the malicious caller, informing one or more authorized organizations, assisting the authorized organizations in taking further actions regarding the call like enabling legal intercept, allowing users to subscribe to a malicious call warning service, informing the user of a potential malicious call before the malicious call is established, rerouting potential malicious calls directly to authorized organizations, or any other reporting or prevention actions.

The first communications device CD1 and said second communications device CD2 being coupled over any suitable communications network CN where the communications network may include a fixed or mobile telephone network or a voice communication supporting internet network using a fixed connection such as xDSL, xPON, WMAN, LAN, a mobile connection such as Wi-Fi, Bluetooth, GSM, 3G, UMTS 4G, LTE, 5G Mobile or any combination of the previous communication networks.

Further, the Application platform device MP is coupled to the communications network CN over a network as specified above or over the telecom's core network using TCP/SCTP, PCM, RTP, Diameter, ISUP, SIP, H.248, HTTP, XCAP or any other protocol that may be appropriate to exchange call trace information, reroute calls, provide announcements, active legal intercept, administer subscriptions, or engage in any other action described above.

A first essential means of a communications device CD1 of an embodiment of the present invention is an abuse report activation means AM that is configured to activate a call abuse reporting procedure. This abuse report activation may be performed by the first user in various ways. In case of a mobile phone, specific gestures from the user like shaking the handset three times can be defined for activating the reporting procedure. In case of a Smartphone, an application (or applet) could provide an on-screen button that the user can push, optionally two or more times to prevent accidental use. Alternatively, a phone for elderly or presumable victims could provide a dedicated button.

Alternatively, such trigger of abuse reporting can be integrated in an existing application (call applet on Smartphone with additional button that needs to be pushed/touched/gestured) or as a stand-alone application (Smartphone with separate applet using e.g. a squeeze gesture). It can also be integrated in an existing device (brain cap configured to use a specific brain thought) or as a stand-alone device (garment with independent network connection that should e.g. be turned or twisted). Evidently, the non-integrated application or device should be coupled to the user's calling application and device.

Further, essential means of the Application platform device MP are a collecting means CM that is configured to collect information on said second call party making abuse, for inclusion in an abuse report at detecting an abuse attempt by said second call party at call abuse activation; and a report creation means RCM that is configured to create a report including said information collected by said collecting means CM. The Application platform device MP additionally includes a reporting means RM that is configured to report abuse of said communication session to an authorized organization. The reporting means RM may comprise analyzing tools and an optionally rule-based system that is able to trigger the authorized organization. The Application platform device MP additionally includes a session intercepting means SIM, that is configured to intercept said communication session, said intercepting being initiated by said authorized organization at reporting of said abuse of said communications session and an action management means AMS, that is configured to manage taking at least one further appropriate action based on input-signals of said authorized organization.

Further, such the Application platform device MP may comprise an Interfacing means IM that is configured to store said information collected in a repository REP, a repository adapted to store information that is collected on an abusing call party and an abuse prevention management means APMM, configured to apply said information collected on a abusing call party for call abuse management. Such repository REP may be located within the Application platform device MP but may alternatively be located externally to the Application platform device MP.

The Authorized Organization Device AOD comprises processing means PM that is configured to determine based on said reported abuse of said communication session, an instruction for a session intercepting means SIM, to intercept said communication session and/or an instruction for said action management means AMS, to manage taking at least one further action.

The authorized Organization Device AOD additionally may comprise an interfacing means INM to accept or collect malicious call (abuse) reports from the reporting means RM in the application platform device MP for the processing means PM to take automated or manual steps to remedy the situation like intercepting the call or requesting localization information of the malicious caller, to connect to the callee in order to be able to advise him from a potential malicious call, or to engage in any other action described above. It should be noted that the user may have warranted one or more authorizing authorities a policy outlining the list of legal actions that one, some or all of the authorities may take in case a malicious call (abuse) report is initiated by the user.

The authorization organization, that may maintain such an authorized Organization Device AOD may be a community build organization maintained collaboratively by largely anonymous Internet volunteers who collaborate without pay. When a potential malicious call is detected, volunteers are selected on a first come first serve basis, will be able to listen in on the conversation, and optionally to intercept and/or reroute the call away from the malicious caller or callee to themselves, to law enforcement organizations, or any other authorized organization.

It is to be noted that the second and optionally any further communications device CD2 have the same structure and couplings as the first communications device CD1.

In order to explain the present invention first it is assumed that a second call party with malicious intent using the associated second communications device CD2 has called the first call party at his communications device CD1.

It is further assumed that this first call party is working at his personal computer.

This second call party tries to convince the the first call party, i.e the callee, by identifying themselves as employees of e.g. Microsoft or a bank - or creditcard company employee with the task of solving a security or software problem on the callee's computer.

Once such malicious call party is able to control the first call party's computer, he/she is able to retreive all kinds of information like paswords, account numbers, and other sensitive information and additionally to install malicious software that can lock down the computer until a payment is made.

Now, at a moment that the first call party gets suspicions on the intent of the second call party, the first call party decides to trigger the abuse report activation means AM by pushing the dedicated button at his Smartphone. This abuse report activation may be performed by the first user in various alternative manners. In case of a mobile phone, for instance a specific gesture from the user like shaking the handset three times can be defined for activating the reporting procedure. In case of a Smartphone, an application (or applet) could provide an on-screen button that the user can push, optionally two or more times to prevent accidental use. Alternatively, a phone for elderly or presumable victims could provide a dedicated button for activating the abuse reporting.

Subsequently, the abuse report activation means AM of the first communications device CD1 send an abuse report activation signal to the collecting means CM of the Application platform device MP. This abuse report activation signal includes data on the first call device such as the phone number of the callee, the phone number of the called, the time of day, the caller's name, the callee's name, and any other information that is available like the device's name and MAC addresses, the IP addresses, telecom network identifiers, rerouting information, call path information within the telecom and external network, the physical locations of the one or both users, the telecom base station, call flags, application identifier, a Website identifier, a conference identifier, and more.

The collecting means CM subsequently starts collecting information on said second call party making abuse, for inclusion in an abuse report at detecting an abuse attempt by said second call party or in case of call abuse activation.

The collecting means CM collects information on the said second call party making abuse, on the communication session and on data such as the phone number of the callee, the phone number of the called, the time of day, the caller's name, the callee's name, and any other information that is available like the device's name and MAC addresses, the IP addresses, telecom network identifiers, rerouting information, call path information within the telecom and external network, the physical locations of the one or both users, the telecom base station, call flags, application identifier, a Website identifier, a conference identifier, and more.

Then based on the collected information, the report creation means RCM creates a report including said information collected by said collecting means CM. Further at completion of such an abuse report, the reporting means RM at the application platform device MP reports the abuse of said communication session to a determined authorized organization which in this case is the police department specialized in phishing attempts. The authorized organization is determined by analyzing tools and an optional rule-based system included in the reporting means that is able to trigger the authorized organization based on the abuse report and optional abuse policy provided by the user at time of subscription to the reporting and preventing service.

Finally, the session intercepting means SIM included in the Application platform device MP intercepts said communication session, where the intercepting is being initiated by said authorized organization at receipt of the abuse reporting on the abuse of said communications session between the first communications device CD1 and the second communications device CD2. Additionally the authorized organization, i.e. the police department further send a activation signal to the action management means AMS, instructing to taking further appropriate actions. The input-signals being the activation signal of said authorized organization includes the policy containing the list of authorized actions like recording voice of the second call party, making analysis of the voice, making analysis on the conversation pattern, determining the physical location of the second call party, informing the user of a potential malicious call before the malicious call is established, rerouting potential malicious calls directly to authorized organizations, or any other reporting or prevention actions.

Further, it is to be noted that although the embodiment describes a server architecture wherein the present invention is implemented and executed, this also could have been implemented and executed in a peer-to-peer architecture, cloud architecture, hardware architecture, and each other form in between.

It is to be noted that the described functional means of the system may be distributed over the first communications device and/or one or more further network elements.

A final remark is that embodiments of the present invention are described above in terms of functional blocks. From the functional description of these blocks, given above, it will be apparent for a person skilled in the art of designing electronic devices how embodiments of these blocks can be manufactured with well-known electronic components. A detailed architecture of the contents of the functional blocks hence is not given.

While the principles of the invention have been described above in connection with specific apparatus, it is to be clearly understood that this description is merely made by way of example and not as a limitation on the scope of the invention, as defined in the appended claims.

## Claims

1. A method for a first call party reporting abuse of a communication session by a second call party, said first call party being involved in said communications session established between said first call party associated with a first communications device (CD1) and at least said second call party associated with a second communications device (CD2), said first communications device (CD1) and said second communications device (CD2) being coupled over a communications network, said method comprising the steps of:
-. Collecting information on said second call party making abuse for inclusion in an abuse report at detecting an abuse attempt by said second call party; and
-. Creating a report including said information collected; and
-. Reporting abuse of said communication session to an authorized organization; and
-. Said authorized organization, based on said reporting of abuse, intercepting said communication session; and
-. Said authorized organization, taking at least one further action.

2. A method according to claim 1, wherein said at least one further appropriate action may include, analyze voice of said second call party, origination tracking of said abusing call-party.

3. A method according to claim 1, wherein said method additionally comprises the steps of:
-. storing said information collected in a repository; and
-. applying said information collected on an abusing party for call abuse management.

4. System configured to report, initiated by a first call party, abuse of a communication session by a second call party, said first call party being involved in said communications session established between a first communications device (CD1) associated with said first call party and a second communications device (CD2) associated with said second call party, said first communications device (CD1) and said second communications device (CD2) being coupled over a communications network, said system comprising:
-. a collecting means (CM), configured to collect information on said second call party making abuse for inclusion in an abuse report at detecting an abuse attempt by said second call party; and
-. a report creation means (RCM), configured to create a report including said information collected by said collecting means (CM); and
-. a reporting means (RM), configured to report abuse of said communication session to an authorized organization; and
-. A session intercepting means (SIM), configured to intercept said communication session initiated by said authorized organization at reporting of said abuse of said communications session;
-. an action management means (AMS), configured to manage taking at least one further action based input of said authorized organization.

5. Application platform device (MP) for use in a System configured to report, initiated by a first call party, abuse of a communication session by a second call party, said first call party being involved in said communications session established between said first communications device (CD1) associated with said first call party and a second communications device (CD2) associated with said second call party, said first communications device (CD1) and said second communications device (CD2) being coupled over a communications network, said Application platform device (MP) comprising:
-. a collecting means (CM), configured to collect information on said second call party making abuse for inclusion in an abuse report at detecting an abuse attempt by said second call party; and
-. a report creation means (RCM), configured to create a report including said information collected by said collecting means (CM); and
-. a reporting means (RM), configured to report abuse of said communication session to an authorized organization.

6. Application platform device (MP) according to claim 6 where said Application platform device (MP) further comprises:
-. A session intercepting means (SIM), configured to intercept said communication session (call) initiated by said authorized organization at reporting of said abuse of said communications session;
-. an action management means (AMS), configured to manage taking at least one further action based input of said authorized organization.

7. Application platform device (MP) according to claim 6 or claim 7, wherein said Application platform (MP) device further comprises:
-. An Interfacing means (IM) configured to store said information collected in a repository (REP); and
-. An abuse prevention management means (APMM), configured to applying said information collected on an abusing call party for call abuse management.

8. Application platform device (MP) according to claim 7, wherein said at least one further appropriate action may include, analyze voice of said second call party, origination tracking of said abusing call-party.

9. First Communications device (CD1) for use in a System configured to report, initiated by a first call party,) abuse of a communication session by a second call party, said first call party being involved in said communications session established between said first communications device (CD1) associated with said first call party and a second communications device (CD2) associated with said second call party, said first communications device (CD1) and said second communications device (CD2) being coupled over a communications network, said first communications device (CD1) comprising:
-. an abuse report activation means (AM), configured to trigger reporting abuse of said communication session.

10. First Communications device (CD1) according to claim 9 wherein said first Communications device (CD1) further comprises an Application platform device (MP) according to any of the claims 5 to 8.

11. Network element for use in a System according to claim 4, wherein said Network element comprises an Application platform device (MP) according to any of the claims 5 to 8.

12. Authorized Organization Device (AOD) for use in a System according to claim 4, wherein said Authorized Organization Device (AOD) comprises processing means (PM) configured to determine based on said report abuse of said communication session an instruction for a session intercepting means (SIM), to intercept said communication session and/or an instruction for said action management means (AMS), to manage taking at least one further action.

13. Authorized Organization Device (AOD) according to claim 12, said Authorized Organization Device (AOD) further comprises an Application platform device (MP) according to any of the claims 5 to 8.
